# EUROPEAN PATENT APPLICATION

(11) **EP 2 777 970 A2**
(43) Date of publication of application: **17.09.2014**
(21) Application number: 14000922.6
(22) Date of filing: 13.03.2014
(51) Int. Cl.: B60K 15/03, B60K 15/035

(54) **Self-draining ullage fuel tank systems and related methods**

(30) Priority: 13.03.2013 US 201313801196
(71) Applicant: BRUNSWICK CORPORATION, Lake Forest, Illinois 60045-4811 (US)
(72) Inventor: Whelan, Sean, Grand Ledge, MI 48837 (US); Tate, Robert, South Haven, MI 49090 (US)
(74) Representative: Samson & Partner

(57) **Abstract**

Self-draining ullage fuel tank system and related methods are described. An example fuel tank apparatus (100) includes a fuel tank (106) and an ullage tank (104) positioned at an elevation relative to the fuel tank. The example fuel tank apparatus also includes a fluid path (128) to fluidly couple a cavity of the fuel tank (106) and a cavity of the ullage tank (104). The fluid path (128) having a first end coupled to the cavity of the fuel tank (106). The fluid path (128) having a second end extending through an opening of an upper wall of the ullage tank (104) and having an opening positioned adjacent a bottom surface of the cavity of the ullage tank.

## Description

### FIELD OF THE DISCLOSURE

This patent relates generally to fuel tanks and, more specifically, to self-draining ullage fuel tank systems and related methods.

### BACKGROUND

Government agency regulations (e.g., regulations provided by the United States Coast Guard, Department of Transportation) require boat and/or marine craft fuel systems to employ evaporative emissions controls to reduce or minimize evaporative emissions (e.g., hydrocarbons). In some instances, evaporative emissions may leak from the fuel system due to, in part, an excess amount of fuel in a fuel tank of the fuel system. For example, in some instances, fuel within the fuel tank may expand during operation and/or non-operation of the marine craft. Such expansion of fuel may be caused by, for example, temperature variations, a refueling event, etc. To allow for expansion of the fuel, a fuel tank of a marine craft typically includes a ullage space (e.g., a volume within a container or tank that is to remain empty or unfilled) to allow for the expansion of fuel vapors and limit the amount of evaporative emissions emitted during operation and/or non-operation of the boat and/or other marine craft. However, the ullage space reduces the overall liquid fuel volume capacity of the fuel tank. As a result, known marine fuel systems often require use of a separate overflow or ullage tank to increase a volume capacity of the fuel tank.

### BRIEF DESCRIPTION OF THE DRAWINGS

FIG. 1 illustrates an example fuel tank assembly having an example self-draining ullage fuel tank in accordance with the teachings disclosed herein.
FIG. 2 depicts a flowchart of an example method to assemble an example self-draining ullage fuel tank system disclosed herein.

### DETAILED DESCRIPTION

To reduce or minimize evaporative emissions, marine fuel systems typically employ a fuel tank system providing a ullage or vapor space (e.g., an unfilled space in a container) that allows for the expansion of liquid fuel (e.g., after a refueling event). For example, government regulations or a manufacturer recommendation may require a certain percentage of a vapor dome or ullage space (e.g., a 5% ullage) when filling the fuel tank to allow for fuel expansion.

Some known marine crafts may employ a fuel tank that includes a dedicated ullage space to allow for the expansion of the fuel. However, because the ullage space of the fuel tank reduces an overall volume or liquid fuel capacity, a separate chamber or ullage tank is often employed to increase or provide additional fuel volume capacity. The separate ullage tank enables liquid fuel in a fuel tank to flow into the ullage tank when the fuel expands due to, for example, an increase in pressure in the fuel tank. As a result, the ullage tank increases the overall volume or liquid fuel capacity of a fuel system. To enable the return of the fuel from the ullage tank to the fuel tank without the use of an external mechanical device (e.g., a pump), the ullage tank is often positioned at an elevation relative to (e.g., a position above) the fuel tank. As a result, the liquid fuel in the ullage tank is able to return freely into the fuel tank after a liquid fuel expansion event (e.g., when an engine of a fuel system demands fuel). Additionally, to allow the liquid fuel in the ullage tank to flow freely into the fuel tank, the fuel tank is typically coupled to the ullage tank via a coupling positioned in a bottom wall or surface (to provide a fluid path therethrough) of the ullage tank to enable substantially all of the fuel in the ullage tank to return or drain to the fuel tank via, for example, gravity. As a result, the ullage tank is self-draining because it allows substantially all of the liquid fuel to empty into the fuel tank without the use of a mechanical device (e.g., a pump).

Although the above-mentioned couplings may employ a gasket and/or a seal to prevent evaporative emissions, the seal may fail, erode and/or become dislodged, thereby causing liquid fuel and/or fuel vapors in the ullage tank to leak to, for example, the environment. While in some instances the ullage tank may be classified (e.g., by government agencies) as a vent, in other instances a ullage tank may be classified as a fuel tank and, thus, must meet certain governmental regulations. For example, government agencies (e.g., the United States Coast Guard, Department of Transportation) have enacted regulations that require each fitting coupled to a fuel tank to be located at a top wall of the fuel tank to prevent leakage of liquid fuel should the seal or gasket fail. Therefore, ullage tanks that are classified as a fuel tank instead of a vent may require fittings to be positioned at a top wall or surface of the ullage tank. As a result, such ullage tanks having fittings positioned at a top wall or surface may require use of an external mechanical device (e.g., a pump) to ensure that all of the liquid fuel is drained from the ullage tank and to the fuel tank when a component of a fuel system (e.g., an engine) demands fuel.

Example ullage tank systems and related methods disclosed herein provide a self-draining ullage tank having fittings positioned on an upper wall or surface of the ullage tank. In other words, the example ullage tank systems and related methods disclosed herein eliminate having to provide a coupling that provides a fluid path through a bottom or lower surface or wall of a ullage tank. Such a coupling is typically required or needed to drain the ullage tank without use of an external mechanical device (e.g., a pump). As a result, the example ullage tank systems and related methods disclosed herein comply with certain United States federal agency regulations requiring all fittings of a fuel tank to be positioned at an upper wall or surface of the fuel tank. Additionally or alternatively, the example ullage tank systems and related methods disclosed herein enable liquid fuel in an example ullage tank to substantially drain and/or return to a fuel tank without the use of an external mechanical device (e.g., a pump).

As used herein, a "fluid" includes, but is not limited to, a liquid such as fuel (e.g., gasoline), a vapor such as fuel vapor (e.g., gasoline vapor), a gas (e.g., air) and/or any combination or mixture thereof.

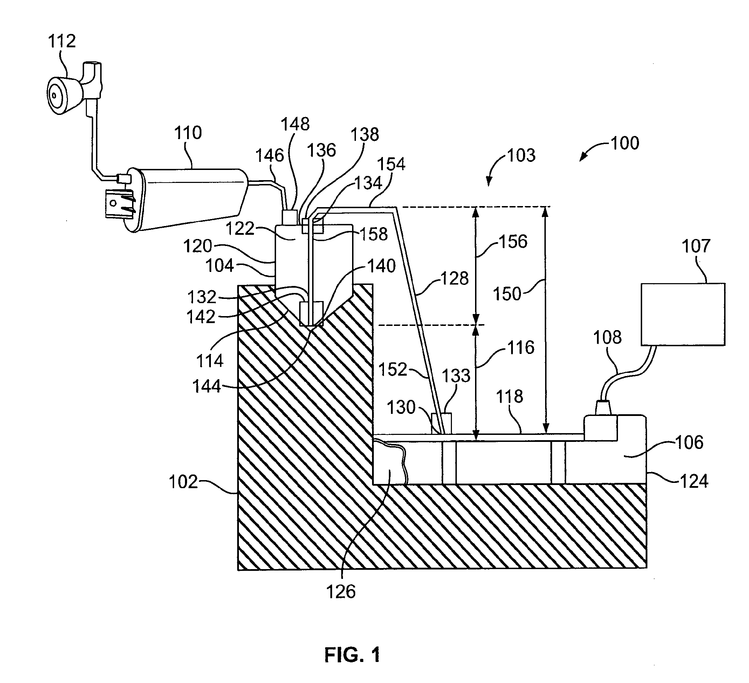

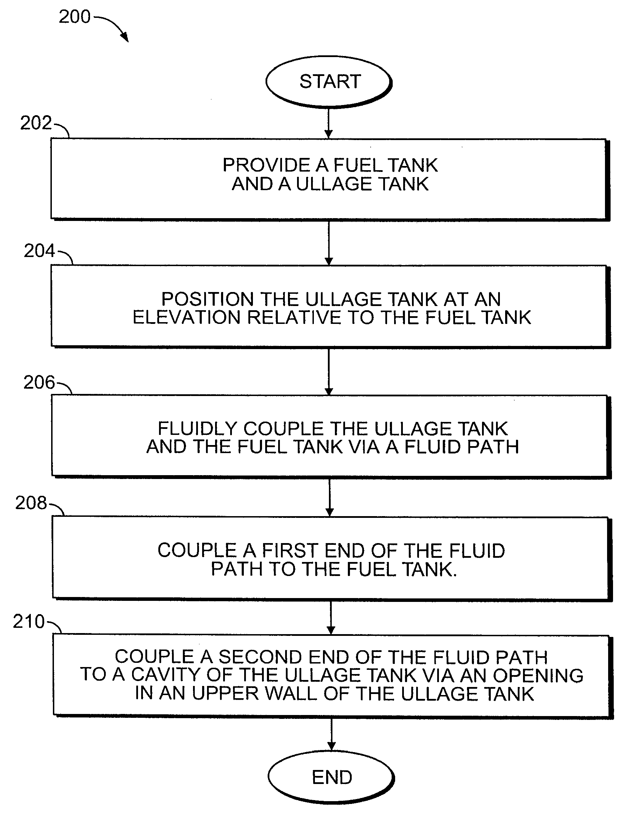

FIG. 1 illustrates a portion of an example fuel system 100 of a boat and/or marine craft 102 disclosed herein. The example fuel system 100 has an example fuel tank assembly 103 employing an example self-draining ullage tank 104 in accordance with the teachings disclosed herein. Referring to the example of FIG. 1, the example fuel tank assembly 103 includes the ullage tank 104 fluidly coupled to a fuel tank 106. The fuel tank 106 receives and/or supplies fuel to an engine 107 via a fuel line 108. The ullage tank 104 is fluidly coupled to a vapor collection apparatus 110 (e.g., a carbon canister), which is coupled to a vent 112.

As shown in the illustrated example, the ullage tank 104 is elevated (e.g., spaced apart by a vertical distance) relative to the fuel tank 106. For example, a bottom portion, wall, or surface 114 of the ullage tank 104 is positioned at a distance, elevation or height 116 (e.g., a vertical or lateral height) relative to an upper portion, surface, or wall 118 of the fuel tank 106. As described in greater detail below, separating the ullage tank 104 and the fuel tank 106 by the height 116 provides, for example, a pressure head when the ullage tank 104 is at least partially filled with liquid fuel. As a result, the height 116 of the ullage tank 104 relative to the fuel tank 106 enables the ullage tank 104 to self-drain into the fuel tank 106 via, for example, a siphon effect.

The ullage tank 104 of the illustrated example includes one or more walls 120 to define a cavity 122. Likewise, the fuel tank 106 includes one or more walls 124 to define a cavity 126. As shown in the example of FIG. 1, a fluid path 128 fluidly couples the cavity 122 of the ullage tank 104 and the cavity 126 of the fuel tank 106. The fluid path 128 of the illustrated example may be, for example, a conduit (e.g., stainless steel piping), tubing (e.g., fuel resistant tubing such as polypropylene and/or other plastic material), etc. The fluid path 128 of the illustrated example includes a first end 130 coupled to the fuel tank 106 and a second end 132 coupled to the ullage tank 104. In particular, the first end 130 of the fluid path 128 of the illustrated example is coupled to the upper wall 118 of the fuel tank 106 via, for example, a fitting 133, plastic welding, etc. Although not shown, in some examples, the first end 130 of the fluid path 128 is configured to extend into the cavity 126 of the fuel tank 106 a predetermined distance associated with a maximum, target and/or other desired liquid fuel level within the fuel tank 106.

The second end 132 of the fluid path 128 of the illustrated example is coupled to the ullage tank 104 through an opening 134 formed in an upper wall 136 (e.g., opposite the bottom wall 114) of the ullage tank 104. A fitting 138, for example, may be coupled to the opening 134 to support at least a portion of the fluid path 128 extending through the opening 134. Further, the second end 132 of the fluid path 128 of the illustrated example extends into the cavity 122 of the ullage tank 104 such that an opening 140 of the second end 132 is substantially adjacent or spaced away (e.g., a quarter inch, a half-inch, an inch, etc.) from the bottom surface 114 of the cavity 112 of the ullage tank 104. In the illustrated example, a support, guide, fitting or other mount 142 may be provided adjacent the bottom surface 114 of the ullage tank 104 to support the second end 132 of the fluid path 128 inside the cavity 122 adjacent the bottom surface 114. As a result, the example ullage and fuel tanks 104 and 106 are fluidly coupled together without having to provide a drain or a fitting through the bottom surface 114 of the ullage tank 104. Further, as described in greater detail below, the liquid fuel from the cavity 122 of the ullage tank 104 is evacuated or removed without the use of an external mechanical force or device (e.g., a pump). Thus, by having the first end 130 of the fluid path 128 coupled to the upper wall 118 of the fuel tank 106 and the second end 132 passing through the upper wall 136 (and not the bottom surface 114) of the ullage tank 104, the example fuel tank assembly 103 complies or meets certain government regulations (e.g., regulations of the United States Coast Guard, Department of Transportation) that require all fittings coupled to a fuel tank to be located at a top wall or surface of a fuel tank.

Additionally or alternatively, in the illustrated example of FIG. 1, the bottom surface 114 of the ullage tank 104 is structured or configured to direct a fluid (e.g., liquid fuel) toward the opening 140 of the second end 132 of the fuel path 128. For example, the bottom surface 114 may be configured to direct liquid fuel to a specified area (e.g., a central area or location) of the cavity 122 of the ullage tank 104. To channel, funnel and/or otherwise direct the liquid fuel to the specified area, the bottom surface 114 of the cavity 122 shown in the illustrated example has a tapered, canted, convex and/or inverted conical-like shape. The opening 140 of second end 132 of the fluid path 128 of the illustrated example is positioned in the cavity 122 adjacent an apex 144 of the inverted conical-like bottom surface 114. Thus, as the liquid fuel in the cavity 122 of the ullage tank 104 drains or flows into the cavity 126 of the fuel tank 106, the bottom surface 114 channels, funnels and/or otherwise directs the liquid fuel in the cavity 122 of the ullage tank 104 towards the opening 142 of the second end 132 of the fluid path 128. As a result, substantially all of the liquid fuel in the cavity 122 of the ullage tank 104 is directed to the opening 140 of the second end 132 as the liquid fuel drains from the ullage tank 104.

In the illustrated example, a second fluid path 146 fluidly couples the cavity 122 of the ullage tank 104 and the vapor collection apparatus 110 (i.e., a carbon canister) to prevent at least one of a vapor or gas from flowing from the fuel tank assembly 103 into the atmosphere via the vent 112. As shown in the example of FIG. 1, the second fluid path 146 is coupled to the upper wall 136 of the ullage tank 104 via, for example, a fitting 148. In other examples, the second fluid path 146 may be coupled to the vent 112 and the vapor collection apparatus 110 may be removed or bypassed.

In operation, the cavity 126 of the fuel tank 106 of the illustrated example receives a fluid (e.g., liquid fuel) from a source (not shown) during a refilling process. When the cavity 126 of the fuel tank 106 is being filled, the volume or the level of liquid fuel within the cavity 126 rises or increases. As the volume of the liquid fuel in the cavity 126 increases, the fuel vapors and/or air within the cavity 126 are vented or displaced through the vent 112 via the cavity 122 of the ullage tank 104 and the vapor collection apparatus 110 (e.g., a carbon canister). In this manner, fuel vapors entering the vapor collection apparatus 110 pass through a filter material (e.g., carbon) in the vapor collection apparatus 110 before passing to the vent 112. Emissions of the fuel vapors that are captured by the filter material and stored in the vapor collection apparatus 110 are later returned or carried to the cavity 122 of the ullage tank 104 and/or the cavity 126 of the fuel tank 106 when air is drawn from the vent 112 to fuel tank 106. For example, the stored emissions return to the fuel tank 106 as air is drawn from the atmosphere via the vent 112, through the vapor collection apparatus 110, and to the cavity 126 of the fuel tank 106 via the first and second fluid paths 128 and 146 and the cavity 122 of the ullage tank 104.

Also, as the cavity 126 of the fuel tank 106 of the illustrated example is being filled with the liquid fuel, the pressure within the cavity 126 of fuel tank 106 may increase. As a result of a pressure increase in the cavity 126 of the fuel tank 106, the liquid fuel in the cavity 126 is directed into the cavity 122 of the ullage tank 104 via the fluid path 128 because the pressure in the cavity 122 of the ullage tank 104 is substantially less than the pressure in the cavity 126 of the fuel tank 106 during the filling event. Additionally or alternatively, at times during operation and/or non-operation of the marine craft 102, an increase in temperature (e.g., due to a diurnal cycle) may cause the liquid fuel in the cavity 126 of the fuel tank 106 to expand. This increase in pressure within the cavity 126 of the fuel tank 106 may cause the liquid fuel to expand and travel into the cavity 122 of the ullage tank 104 via the fuel path 128.

As the excess liquid fuel enters the cavity 122 of the ullage tank 104 of the illustrated example, the liquid fuel collects at the bottom surface 114 of the cavity 122. Because the second end 132 of the fluid path 128 is positioned adjacent the apex 144, the second end 132 becomes submerged within the liquid fuel as the liquid fuel collects within the cavity 122 and rises toward the upper wall 136. As a result, the excess liquid fuel fills the cavity 122 of the ullage tank 104. Eventually, the pressure within the cavity 126 of the fuel tank 106 may decrease. For example, the pressure within the cavity 126 of the fuel tank 106 may decrease as the filling event terminates and/or the temperature within the cavity 126 decreases (e.g., due to the diurnal cycle). Further, the cavity 122 of the ullage tank 104 of the illustrated example is substantially at atmospheric pressure because the cavity 122 is fluidly coupled to the vent 112. As a result, the pressures in the respective cavities 122 and 126 of the ullage tank 104 and fuel tank 106 substantially equalize (e.g., after a fueling event) when the liquid fuel is stored in the cavity 122 of the ullage tank 104. Further, due to the elevation difference between the ullage tank 104 and the fuel tank 106, the liquid fuel stored in the cavity 122 of the ullage tank 102 of the illustrated example provides a hydrostatic pressure or pressure head. As described in greater detail below, hydrostatic pressure or pressure head provided by the liquid fuel in ullage tank 104 enables a siphon effect that may be initiated when the first end 130 of the fluid path 128 is primed to start a liquid flow.

For example, a siphon effect of the illustrated example may be initiated when a pressure within the cavity 126 of the fuel tank 106 decreases to a pressure that is less than a pressure of the cavity 122 of the ullage tank 104. For example, a siphon effect may be initiated during operation of the marine craft 102 as the engine 107 draws or demands the liquid fuel from the cavity 126 of the fuel tank 106 via the fuel line 108. In particular, the engine 107 creates a vacuum or suction at the first end 130 of the fluid path 128 to draw the liquid fuel from the cavity 126 of the fuel tank 106, thereby causing the pressure in the cavity 126 to decrease. This vacuum or decrease in pressure in the cavity 126 of the fuel tank 106 can prime or initiate the siphon effect of the fuel tank assembly 103 to cause the liquid fuel in the cavity 122 of the ullage tank 104 to flow into the cavity 126 of the fuel tank 106 when the pressure in the fuel tank 106 is less than the pressure in the ullage tank 104. In the illustrated example, the liquid fuel flows from the cavity 122 of the ullage tank 104 and into the cavity 126 of the fuel tank 106 when the siphon effect is primed because the elevation of the ullage tank 104 relative to the fuel tank 106 provides a hydrostatic pressure that acts on the liquid fuel in the ullage tank 104. In other words, because a length 150 of a first portion 152 of the fuel path 128 located between a third portion 154 of the fuel path 128 and the first end 130 is greater than a length 156 of a second portion 158 of the fuel path 128 located between the third portion 154 and the second end 132, the liquid fuel in the ullage tank 104 is able to flow into the cavity 126 of the fuel tank 106 after the siphon effect is primed or initiated. The siphon effect allows or causes the liquid fuel in the ullage tank 104 to be drawn back into the cavity 126 of the fuel tank 106 via the fluid path 128. Further, in the illustrated example, the second end 132 of the fluid path 128 is submerged in the liquid fuel and is positioned adjacent the apex 144 of the bottom portion 114 of the cavity 122 to allow substantially all of the liquid fuel within the cavity 122 of the ullage tank 104 to be drawn to the cavity 126 of the fuel tank 106 via the siphon effect. As a result, substantially all of the liquid fuel in the ullage tank 104 is able to return to the fuel tank 106 without the use of, for example, a pump.

As noted above, the fuel tank assembly 103 of the illustrated example is self-draining because substantially all of the liquid fuel within the cavity 122 of the ullage tank 104 may empty into the cavity 126 of the fuel tank 106 without the use of an external mechanical force or device. Further, because the fittings 138 and 148 of the example fuel tank assembly 103 are coupled to the upper wall 136 of the ullage tank 104, the need to implement and/or position a drain or fitting on a side or bottom wall of the ullage tank 104 is eliminated. In turn, the example fuel tank assembly 103 complies or meets certain government regulations (e.g., regulations of the United States Coast Guard, Department of Transportation) requiring all fittings coupled to a fuel tank to be located at a top wall of the fuel tank.

FIG. 2 is a flowchart of an example method 200 that may be used to assemble an example self-draining ullage fuel tank system disclosed herein such as the example fuel tank assembly 103 of FIG. 1. While the example method 200 may be used to assemble an example fuel system herein, one or more of the blocks and/or processes illustrated in FIG. 2 may be combined, divided, re-arranged, omitted, eliminated and/or implemented in any other way. Further still, the example method of FIG. 2 may include one or more blocks in addition to, or instead of, those illustrated in FIG. 2, and/or may include more than one of any or all of the illustrated blocks. Although the example method 200 is described with reference to the flowchart illustrated in FIG. 2, many other methods of assembling an example fuel tank system may alternatively be used. Because the example method 200 may be used to assemble the example fuel tank system of FIG. 1, those components identified in FIG. 1 that have functions substantially similar or identical to the functions of those components described below will not be described in detail again. Instead, the interested reader is referred to the above corresponding descriptions. To facilitate this process, the same reference numbers will be used for like structures.

The example method to assemble an example self-draining ullage fuel tank system disclosed herein is discussed in connection with the example fuel tank system 100 of FIG. 1. The example method 200 disclosed herein may begin by providing a ullage tank 104 and a fuel tank 106 (block 202). For example, the ullage and fuel tanks 104 and 106 may be positioned within a boat and/or marine craft 102. Additionally or alternatively, the ullage tank 104 is positioned at a distance, elevation or height 116 relative to the fuel tank 106 (block 204). For example, a bottom surface 114 of the ullage tank 104 may be positioned near (e.g., above, aligned with and/or slightly below) an upper wall 118 of the fuel tank 106 spaced by the height 116.

Further, the ullage and fuel tanks 104 and 106 are fluidly coupled via a fluid path 128 (block 206). For example, a first end 130 of the fluid path 128 is coupled to the fuel tank 106 (block 208). In some instances, the first end 130 of the fluid path 128 is coupled to the fuel tank 106 via a fitting, plastic welding, etc. In the example method 200, a second end 132 of the fluid path 128 is at least partially positioned in a cavity 122 of the ullage tank 104 via an opening 134 in an upper wall 136 of the ullage tank 104 (block 210). In some instances, the second end 132 is positioned adjacent a bottom portion 114 of the cavity 122 of the ullage tank 104. In some such instances, a support 142 may be provided adjacent the bottom surface 114 to support or hold the second end 132 of the fluid path 128 inside the cavity 122. Additionally or alternatively, in some instances, the bottom surface 114 may be configured with a tapered shape, a convex shape, an inverted conical-like shape and/or any other shape to channel or direct fluid toward the opening 140 of the second end 132 of the fluid path 128. In some such instances, the second end 122 of the fluid path 128 may be positioned adjacent an apex 126 of the bottom portion 114.

Additionally or alternatively, the cavity 122 of the ullage tank 104 of the illustrated example may be fluidly coupled to a vent 112. In some instances, a vapor collection apparatus 110 may be coupled between the vent 112 and the cavity 122 of the ullage tank 104 via a second fluid path 146. In such instances, the second fluid path 146 is coupled to a fitting 148 that is coupled to the upper wall 136 of the ullage tank 104.

Although certain example methods, apparatus and articles of manufacture have been described herein, the scope of coverage of this patent is not limited thereto. On the contrary, this patent covers all methods, apparatus and articles of manufacture fairly falling within the scope of the appended claims either literally or under the doctrine of equivalents.

## Claims

1. An apparatus, comprising:
a ullage tank defining a cavity to contain excess fuel from a cavity of a fuel tank; and
a fluid path to fluidly couple the cavity of the ullage tank and the cavity of the fuel tank, the fluid path positioned through an upper wall of the ullage tank, at least a portion of the fluid path positioned adjacent a bottom wall in the cavity of the ullage tank, the bottom wall being opposite the upper wall.

2. The apparatus of claim 1, wherein the cavity of the ullage tank is positioned at an elevation relative to the fuel tank.

3. The apparatus of claim 2, wherein the fluid path has a first end coupled to the cavity of the fuel tank, and wherein the fluid path has a second end extending through an opening of the upper wall of the ullage tank and having an opening positioned adjacent a bottom surface of the bottom wall of the ullage tank.

4. The apparatus of claim 3, wherein the fluid path is to provide a siphon effect that is initiated when the first end of the fluid path is primed to start liquid flow.

5. The apparatus of claim 4, wherein the first end of the fluid path is primed to start liquid flow via a vacuum to draw excess fuel from the cavity of the ullage tank to the cavity of the fuel tank.

6. The apparatus of claim 5, wherein the siphon effect is to draw fuel from the cavity of the ullage tank toward the cavity of the fuel tank.

7. The apparatus of claim 3, wherein the bottom surface of the cavity of the ullage tank has a convex shape.

8. The apparatus of claim 3, wherein the opening is positioned adjacent an apex of the bottom surface of the cavity of the ullage tank.

9. The apparatus of claim 1, wherein the bottom wall of the ullage tank has an inverted conical-like shape.

10. The apparatus of claim 1, further comprising a second fluid path coupled to the upper wall of the ullage tank, the second fluid path to fluidly couple the cavity of the ullage tank and the atmosphere or a vent.

11. A method for coupling a fuel tank assembly, comprising:
providing a fuel tank;
providing a ullage tank;
positioning the ullage tank at a height relative to the fuel tank; and
fluidly coupling a cavity defined by the fuel tank and a cavity defined by the ullage tank via a fluid path, a first end of the fluid path being coupled to the fuel tank, a second end of the fluid path being positioned through an upper wall of the ullage tank and at least partially positioned in the cavity of the ullage tank.

12. The method of claim 11, wherein positioning the fluid path at least partially in the cavity of the ullage tank comprises positioning the second end of the fluid path adjacent a bottom portion of the ullage tank.

13. The method of claim 12, further comprising fluidly coupling the cavity of the ullage tank and the atmosphere via a vent.

14. The method of claim 12, further comprising securing the second end of the fluid path adjacent the bottom portion of the ullage tank via a coupling.
